# EUROPEAN PATENT APPLICATION

(11) **EP 2 461 571 A2**
(43) Date of publication of application: **06.06.2012**
(21) Application number: 11191581.5
(22) Date of filing: 01.12.2011
(51) Int. Cl.: H04N 5/232, H04N 5/335

(54) **Image capture apparatus**

(30) Priority: 03.12.2010 JP 2010270792
(71) Applicant: Canon Kabushiki Kaisha, Tokyo 146-8501 (JP)
(72) Inventor: Taniguchi, Hidenori, Ohta-ku, Tokyo (JP)
(74) Representative: Northway, Daniel Robert

(57) **Abstract**

An image capture apparatus includes an image sensor (107) which includes, a plurality of image forming pixels, and a plurality of focus detecting pixels that receive light beams having passed through the exit pupils of the imaging lenses while they are partially shielded, a vertical output line (505) which outputs, in the vertical direction of the image sensor, signals of a plurality of pixels aligned on one column, a vertical addition unit (502) which adds, in the vertical direction of the image sensor, signals of a plurality of pixels aligned on one column, and a control unit (121) which controls so that the vertical addition unit is always OFF when the focus detecting pixel is included in pixels having signals to be added, in adding the signals of the plurality of pixels in the vertical direction and reading them out by the vertical addition unit.

## Description

### BACKGROUND OF THE INVENTION

### Field of the Invention

The present invention relates to an image capture apparatus capable of capturing a still image or a moving image using a large number of photoelectric conversion elements arranged in a two-dimensional pattern.

### Description of the Related Art

In recent years, a digital camera and video camera which use a solid-state image sensor such as a CCD or a CMOS are prevalent. Such a digital camera and video camera typically have an autofocus (to be abbreviated as AF hereinafter) function for automatically adjusting the focus position of an imaging lens. A compact camera and video camera typically perform AF by the contrast scheme, in which the contrast of an image capture signal is evaluated to adjust the focus state.

Also, in still image capture which uses an optical finder, a digital single-lens reflex camera performs AF using a dedicated phase difference focus detecting device by dividing an image capture light beam into those for an optical finder and a focus detecting means using a quick return mirror. In contrast, in using an electronic viewfinder or moving image capture, like a compact camera or video camera, the digital single-lens reflex camera performs AF by the contrast scheme by retracting the quick return mirror so that an image capture light beam is guided only to a solid-state image sensor.

However, the dedicated phase difference focus detection device is disadvantageous in, for example, space and cost, and the contrast scheme has a drawback that it cannot perform high-speed focusing because it searches for a position at which the contrast of an image capture signal maximizes while changing the focus position of the imaging lens.

To overcome the above-mentioned drawback, there has been proposed a technique of shifting the sensitivity regions of light-receiving portions with respect to the optical axes of on-chip microlenses in some light-receiving elements (pixels) of the image sensor to impart a pupil division function to them, thereby allowing these pixels to serve as focus detecting pixels. By arranging focus detecting pixels between image forming pixels with predetermined spacings between them, AF by the phase difference scheme can be implemented even in using an electronic viewfinder or moving image capture.

Also, Japanese Patent Laid-Open No. 2009-89143 proposes an approach of separately providing signal lines, output circuits, and scanning circuits, which are used to read out signals, to image forming pixels and focus detecting pixels so as to read out signals from the focus detecting pixels in the image sensor at high speed.

Japanese Patent Laid-Open No. 2009-128892 proposes an approach of efficiently reading out signals from focus detecting pixels without adversely affecting, for example, the frame rate of a captured image in a mode in which signals of the solid-state image sensor are thinned and read out so as to ensure a given frame rate, as in, for example, using an electronic viewfinder or moving image capture.

In Japanese Patent Laid-Open No. 2010-20055, the applicant of the present invention proposes a method of reading out signals from image forming pixels and focus detecting pixels while preventing mixing them with each other when a focus detecting pixel is included in pixels having signals to be added, in an addition readout mode in which signals of the pixels of the image sensor are read out while adding them so as to prevent degradation in image quality due, for example, to moiré in using an electronic viewfinder or moving image capture.

Unfortunately, it is conventionally impossible to perform focus detection while suppressing degradation in image quality when an electronic viewfinder mode or a moving image capture mode is set in an image capture apparatus which performs phase difference AF using an image sensor.

In, for example, Japanese Patent Laid-Open No. 2009-89143, signal lines, output circuits, and scanning circuits, which are used to read out signals of image forming pixels and focus detection pixels, are separately provided to the image forming pixels and the focus detecting pixels to read out signals from the focus detecting pixels at high speed. However, this patent literature describes none of an electronic viewfinder mode and a thinning readout mode and addition readout mode which are used in moving image capture. Also, this technique requires two readout circuits, thus complicating the circuitry.

Japanese Patent Laid-Open No. 2009-128892 proposes readout in an electronic viewfinder mode and moving image capture. However, this technique divides the field in the vertical direction into first and second fields by thinning read out signals from the image forming pixels and focus detecting pixels in the respective fields, thus making it impossible to suppress moiré in the vertical direction.

In Japanese Patent Laid-Open No. 2010-20055 as well, a signal of a focus detecting pixel is solely output when the focus detecting pixel is included in pixels having signals to be added in the horizontal direction, but this patent literature gives no details of addition in the vertical direction.

### SUMMARY OF THE INVENTION

The present invention has been made in consideration of the above-mentioned problems, and in embodiments of certain aspects prevents signals of image forming pixels and focus detecting pixels from mixing with each other even when the image forming pixels are added and read out in the horizontal and vertical directions in an electronic viewfinder mode or moving image capture.

According to the present invention, there is provided an image capture apparatus as specified in claim 1.

The invention extends to methods, apparatus and/or use substantially as herein described with reference to the accompanying drawings. Any feature in one aspect of the invention may be applied to other aspects of the invention, in any appropriate combination. In particular, features of method aspects may be applied to apparatus aspects, and vice versa. Further features of the present invention will become apparent from the following description of exemplary embodiments with reference to the attached drawings.

### BRIEF DESCRIPTION OF THE DRAWINGS

Fig. 1 is a block diagram of a camera according to the first embodiment;

Figs. 2A and 2B are a plan view and sectional view, respectively, of image forming pixels of an image sensor according to the first embodiment;

Figs. 3A and 3B are a plan view and sectional view, respectively, of focus detecting pixels of the image sensor according to the first embodiment;

Fig. 4 is a circuit diagram of a pixel portion of the image sensor according to the first embodiment;

Fig. 5 is an overall block diagram of the image sensor according to the first embodiment;

Figs. 6A-6I show views for explaining the pixel arrangement and horizontal vertical addition of the image sensor according to the first embodiment;

Figs. 7A and 7B are timing charts of vertical transfer of the image sensor according to the first embodiment;

Fig. 8 is a timing chart of horizontal transfer of the image sensor according to the first embodiment;

Fig. 9 is a circuit diagram of a pixel portion of an image sensor according to a modification to the first embodiment;

Fig. 10 is a circuit diagram of a pixel portion of an image sensor according to the second embodiment;

Fig. 11 is a timing chart of driving of the pixel portion of the image sensor according to the second embodiment;

Fig. 12 is an overall block diagram of the image sensor according to the second embodiment;

Figs. 13A-13G show views for explaining the pixel arrangement and vertical addition of the image sensor according to the second embodiment; and

Figs. 14A and 14B are timing charts of vertical transfer of the image sensor according to the second embodiment.

### DESCRIPTION OF THE EMBODIMENTS

Embodiments of the present invention will be described below with reference to the accompanying drawings.

### (First Embodiment)

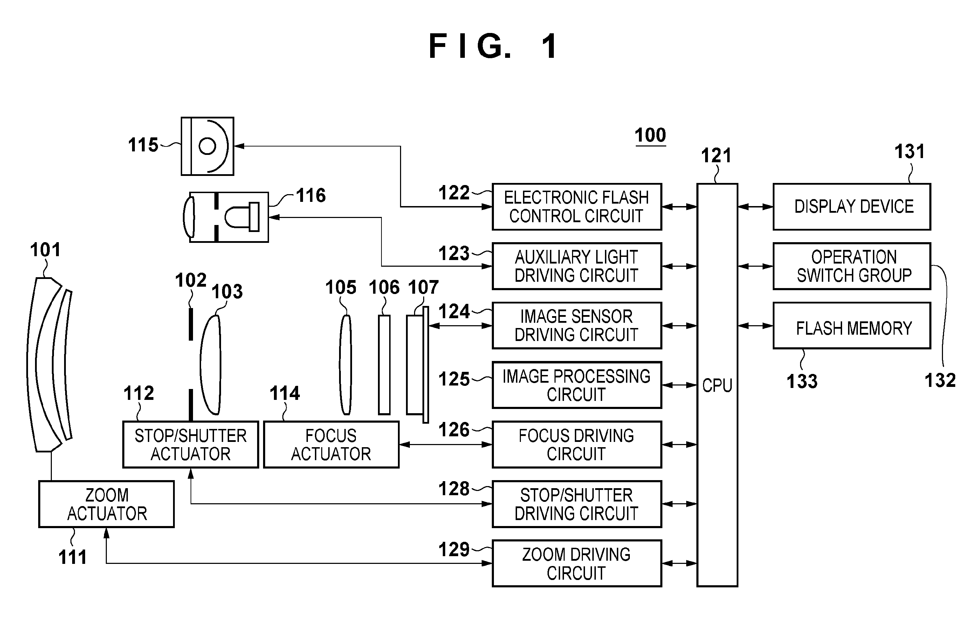

Fig. 1 is a block diagram showing the configuration of a digital camera 100 that exemplifies an image capture apparatus according to a first embodiment of the present invention. Referring to Fig. 1, reference numeral 101 denotes a first lens group positioned at the distal end of an imaging optical system. The first lens group 101 is held to be extendable/retractable in the optical axis direction. Reference numeral 102 denotes a stop & shutter which not only adjusts the amount of light in image capture by adjusting its aperture diameter, but also functions as an exposure time adjusting shutter in still image capture. Reference numeral 103 denotes a second lens group. The stop & shutter 102 and second lens group 103 move in the optical axis direction together, and interlock with the moving first lens group 101 to provide a scaling function (zoom function). Reference numeral 105 denotes a third lens group which moves in the optical axis direction to perform focus adjustment. Reference numeral 106 denotes an optical lowpass filter which serves as an optical element for reducing the false color and moiré of a captured image. Reference numeral 107 denotes an image sensor which includes a CMOS sensor and its peripheral circuit. The image sensor 107 uses a two-dimensional single-plate color sensor which has a pixel matrix formed by arranging pixels in the row direction (horizontal direction) and the column direction (vertical direction), and is configured by forming primary color mosaic filters on m (horizontal) × n (vertical) light-receiving pixels in an on-chip configuration so that these filters are arranged in a Bayer pattern. The image sensor 107 includes pluralities of image forming pixels and focus detecting pixels.

Reference numeral 111 denotes a zoom actuator which pivots a cam cylinder (not shown) to drive the first lens group 101 to third lens group 105 in the optical axis direction, thereby performing a scaling operation. Reference numeral 112 denotes a stop/shutter actuator which controls the aperture diameter of the stop & shutter 102 to adjust the amount of image capture light, and controls the exposure time in still image capture. Reference numeral 114 denotes a focus actuator which drives the third lens group 105 in the optical axis direction to perform focus adjustment. Reference numeral 115 denotes an electronic flash which is used to illuminate an object in image capture. Reference numeral 116 denotes an AF auxiliary light unit which projects an image of a mask having a predetermined opening pattern onto the field via a light projection lens to improve the focus detection capability for a dark object or a low-contrast object.

Reference numeral 121 denotes a CPU which performs various types of control of the camera body. The CPU 121 includes, for example, an arithmetic unit, ROM, RAM, A/D converter, D/A converter, and communication interface circuit, and drives various circuits, provided in the camera, based on a predetermined program stored in the ROM, thereby executing a series of operations including, for example, AF, image capture, image processing, and recording. Reference numeral 122 denotes an electronic flash control circuit which ON/OFF-controls the electronic flash 115 in synchronism with an image capture operation. Reference numeral 123 denotes an auxiliary light driving circuit which ON/OFF-controls the AF auxiliary light unit 116 in synchronism with a focus detection operation.

Reference numeral 124 denotes an image sensor driving circuit which controls the image sensing operation of the image sensor 107, A/D-converts an acquired image signal, and sends it to the CPU 121. Reference numeral 125 denotes an image processing circuit which performs various types of processing such as gamma conversion, color interpolation, and JPEG compression of an image acquired by the image sensor 107.

Reference numeral 126 denotes a focus driving circuit which controls driving of the focus actuator 114 based on the focus detection result under the control of the CPU 121, and drives the third lens group 105 in the optical axis direction to perform focus adjustment. Reference numeral 128 denotes a stop/shutter driving circuit which controls driving of the stop/shutter actuator 112 to control the aperture of the stop & shutter 102. Reference numeral 129 denotes a zoom driving circuit which drives the zoom actuator 111 in accordance with the zoom operation of the photographer.

Reference numeral 131 denotes a display device such as an LCD. The display device 131 displays, for example, information associated with an image capture mode, a preview image before image capture, a confirmation image after image capture, and a focus state display image upon focus detection, in the digital camera 100. Reference numeral 132 denotes an operation switch group which includes, for example, a power supply switch, release (image capture trigger) switch, zoom operation switch, and mode selection switch. The mode selection switch functions as a mode setting unit capable of setting a still image capture mode, a moving image capture mode, and an electronic viewfinder mode. In the moving image capture mode or the electronic viewfinder mode, a thinning readout mode and an addition readout mode (first addition readout mode or second addition readout mode) (both will be described later) can be set. Reference numeral 133 denotes a detachable flash memory which records a captured image.

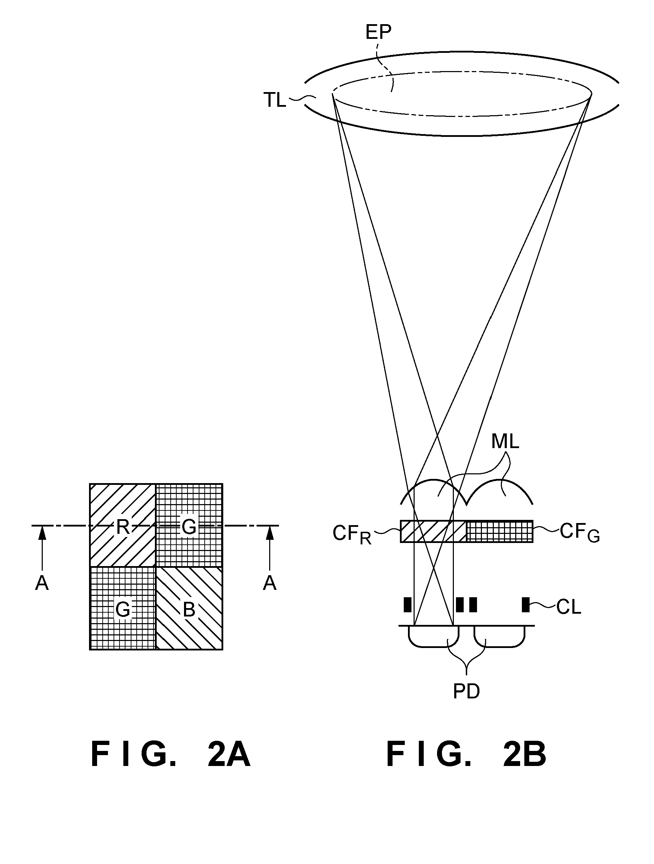

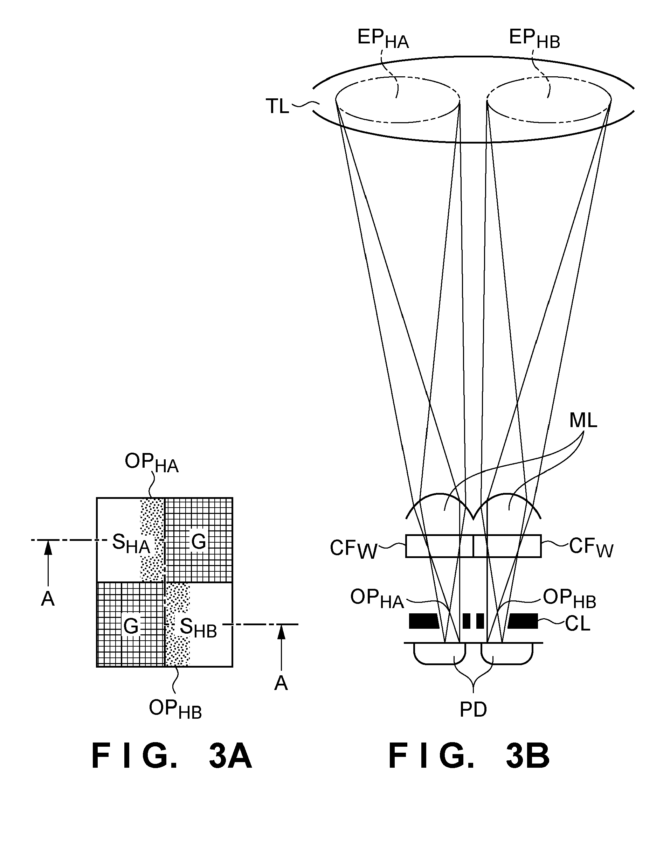

Figs. 2A and 2B and 3A and 3B are views for explaining the structures of image forming pixels and focus detecting pixels, respectively. In this embodiment, a plurality of focus detecting pixels which receive light that passes through a partial region (a partially shielded region) of the exit pupil of the imaging optical system are provided. This embodiment adopts a Bayer arrangement in which pixels having G (Green) spectral sensitivity are arranged as two diagonally opposed pixels among four pixels on 2 rows × 2 columns (a row and a column will be symbolized by X and Y hereinafter and, for example, "2 rows × 2 columns" will be represented as "2 × 2" hereinafter), and a pixel having R (Red) spectral sensitivity and a pixel having B (Blue) spectral sensitivity are arranged as the remaining two pixels. Focus detecting pixels having a structure to be described later are distributed among the pixels in the Bayer arrangement.

Figs. 2A and 2B show the arrangement and structure, respectively, of the image forming pixels. Fig. 2A is a plan view of 2 × 2 image forming pixels. As is known, in the Bayer arrangement, structures each having 2 × 2 pixels are repeatedly arranged by diagonally opposing G pixels as two of four pixels, and diagonally opposing R and B pixels as the remaining two pixels. Fig. 2B is a sectional view taken along a line A - A in Fig. 2A. Reference symbol ML denotes an on-chip microlens placed on the forefront surface of each pixel. Reference symbol CF_{R} denotes an R (Red) color filter. Reference symbol CF_{G} denotes a G (Green) color filter. Reference symbol PD (PhotoDiode) denotes the schematic configuration of a photoelectric conversion unit of the CMOS sensor. Reference symbol CL (Contact Layer) denotes an interconnection layer used to form signal lines via which various signals in the CMOS sensor are transmitted. Reference symbol TL (Taking Lens) denotes the schematic configuration of the imaging optical system.

The on-chip microlens ML and photoelectric conversion unit PD of each image forming pixel are configured to capture a light beam, having passed through the imaging optical system TL, as much as possible. The photoelectric conversion unit PD and an exit pupil EP (Exit Pupil) of the imaging optical system TL are made conjugate to each other by the on-chip microlens ML, and the photoelectric conversion unit PD is designed to have a large effective area. Although a light beam incident on an R pixel has been described with reference to Fig. 2B, G (Green) and B (Blue) pixels have the same structure. Therefore, the exit pupil EP corresponding to each of the R, G, and B image forming pixels has a large diameter so that it efficiently captures a light beam from the object, thereby improving the S/N ratio of an image signal. In this manner, a plurality of image forming pixels receive light beams, respectively, which pass through the entire region of the exit pupil EP, to generate an image of the object.

Figs. 3A and 3B are views showing the arrangement and structure, respectively, of the focus detecting pixels used to perform pupil division of the imaging optical system TL in the horizontal direction (lateral direction). The "horizontal direction" means herein a direction along a straight line which extends horizontally and is perpendicular to the optical axis of the imaging optical system TL when the image capture apparatus is placed such that this optical axis and each long side of the image capture region become parallel to the ground surface. Fig. 3A is a plan view of 2 × 2 pixels including focus detecting pixels. To obtain an image signal for recording or visual enjoyment, the main components of luminance information are acquired by G pixels. Because the human's image recognition property is sensitive to the luminance information, degradation in image quality is more likely to be perceived if a G pixel is missing. On the other hand, the R or B pixels are used to acquire color information (color difference information). Because the human's image recognition property is insensitive to the color information, degradation in image quality is less likely to be perceived even if some pixels used to acquire color information are missing. Hence, in this embodiment, among 2 × 2 pixels, G pixels are left as image forming pixels, whereas R and B pixels are replaced with focus detecting pixels. Referring to Fig. 3A, reference symbols S_{HA} and S_{HB} denote these focus detecting pixels.

Fig. 3B is a sectional view taken along a line A - A in Fig. 3A. An on-chip microlens ML and a photoelectric conversion unit PD have the same structures as those of the image forming pixel shown in Fig. 2B. In this embodiment, signals of the focus detecting pixels are not used to generate an image, and a transparent film CF_{W} (white) or CF_{G} (green) is placed instead of a color separation color filter. Also, to perform pupil division by the image sensor 107, an opening portion in the interconnection layer CL shifts in one direction with respect to the central line of the on-chip microlens ML. More specifically, an opening portion OP_{HA} of the pixel S_{HA} shifts to the right to receive a light beam having passed through a left exit pupil EP_{HA} of the imaging optical system TL. An opening portion OP_{HB} of the focus detecting pixel S_{HB} shifts to the left to receive a light beam having passed through a right exit pupil EP_{HB} of the imaging optical system TL. Pixels S_{HA} are horizontally arranged in a regular pattern, and an object image acquired by these pixels is defined as image A. Also, focus detecting pixel S_{HB} are horizontally arranged in a regular pattern, and an object image acquired by these pixels is defined as image B. In this case, the amount of focus shift (amount of defocus) of an object image can be detected by detecting the relative position between images A and B. Pixels used to perform pupil division in the vertical direction are also provided.

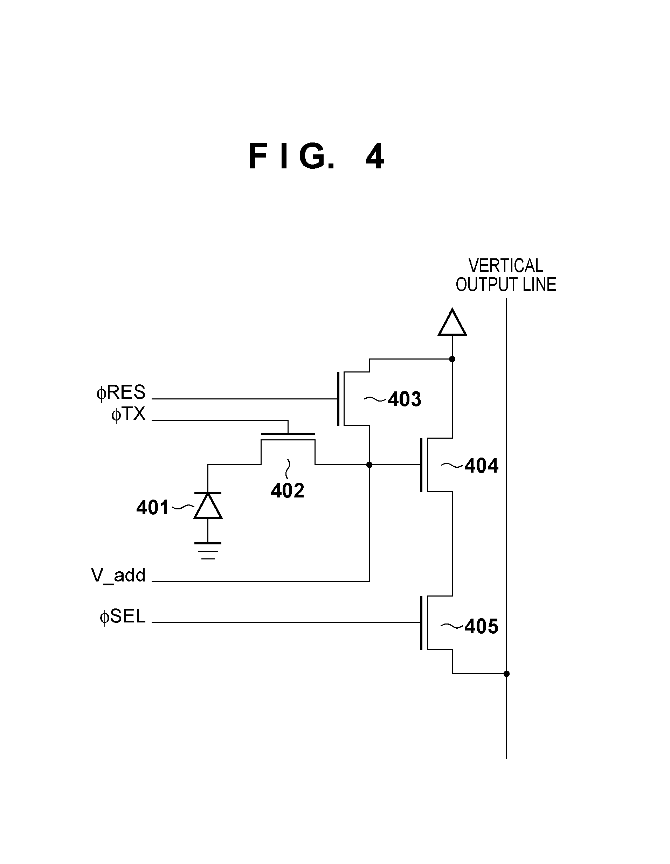

Fig. 4 is a circuit diagram showing the circuit of one pixel portion of the CMOS image sensor used in this embodiment. Reference numeral 401 denotes a photodiode which receives light that is reflected by the object and enters an imaging lens, and photoelectrically converts it; and 402, a charge transfer MOS which is used to transfer the signal charge stored on the photodiode 401 to a capacitor of a floating diffusion portion (to be abbreviated as an FD hereinafter), and is controlled in accordance with a signal φTX. Reference numeral 403 denotes a reset MOS which is used to reset the photodiode 401 and the FD capacitor, and is controlled in accordance with a signal φRES. Reference numeral 404 denotes a source follower amplifier which has an FD capacitor (not shown) in its gate, and is used to convert the signal charge transferred to the FD capacitor into a voltage. Also, to make it possible to add pixel outputs in the vertical direction, an addition signal line V_add is connected to the gate of the source follower amplifier 404, that is, the FD capacitor. A detailed addition method will be described later. Reference numeral 405 denotes a pixel selection MOS transistor which outputs the output of the source follower amplifier 404 to a vertical output line under the control of a control signal φSEL.

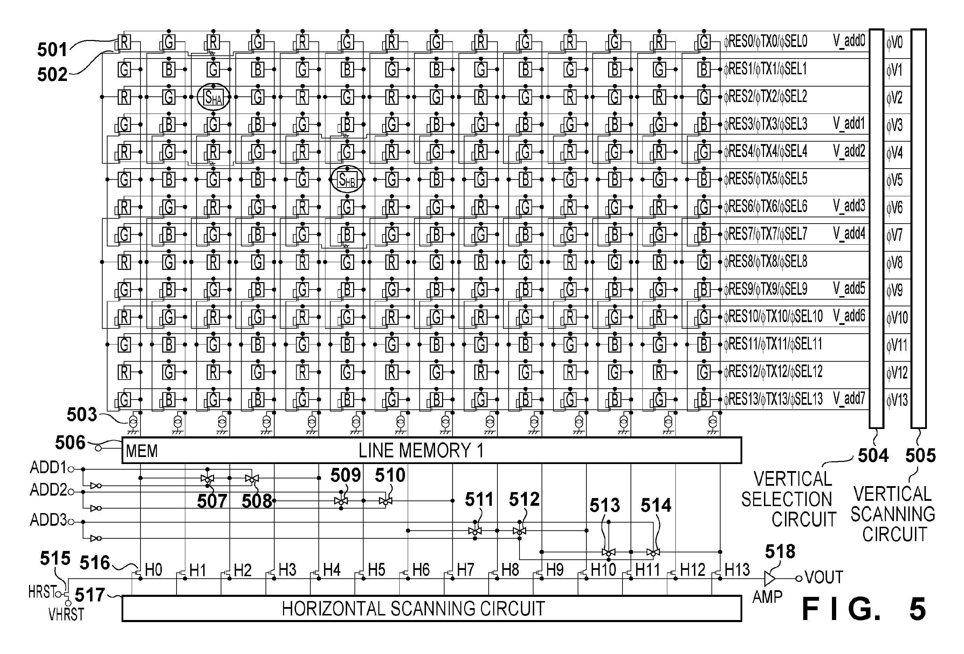

Fig. 5 is a block diagram showing the overall circuit blocks of the CMOS image sensor used in the first embodiment. Although an image sensor having several million or more pixels has been put into practical use as an actual product, a configuration having 14 × 14 pixels will be described herein for the sake of simplicity.

Reference numeral 501 denotes a pixel portion having the circuitry shown in Fig. 4, in which 14 × 14 pixels are arranged. Pixel coordinates (X, Y) = (0,0) to (13,13) are assigned to the 14 × 14 pixels with reference to the upper left pixel. Color filters are arranged in a Bayer pattern, and R (Red), G (Green), and B (Blue) in Fig. 5 represent the colors of color filters coated on the photodiodes. Two pixels indicated by circles in Fig. 5 exemplify the focus detecting pixels described with reference to Fig. 3, so the pixel S_{HA} is placed at coordinates (2,2), the pixel S_{HB} is placed at coordinates (5,5), and G or transparent color filters are used for the focus detecting pixels so as to allow focus detection. Although a plurality of pairs of focus detecting pixels S_{HA} and S_{HB} are distributed on the image sensor and perform focus detection, a configuration in which only one pair of focus detecting pixels S_{HA} and S_{HB} are placed will be described for the sake of descriptive simplicity.

Reference numeral 502 denotes a MOS transistor used to add pixel outputs in the vertical direction. MOS transistors 502 are commonly controlled for each row by eight signal lines: signal lines V_add0 to V_add7. An addition method will be described using column 0 as a representative. In this case, the signal lines V_add0 to V_add7 are changed to H level to turn on the MOS transistors 502 so that the FD capacitors of three R pixels at (0, 0), (0,2), and (0,4), three G pixels at (0,3), (0,5), and (0,7), three R pixels at (0,6), (0,8), and (0,10), and three G pixels at (0,9), (0,11), and (0,12), are connected in parallel with each other, and the charges on the photodiodes of the respective pixels are transferred to the parallel-connected FD capacitors, thereby performing addition. The same applies to other columns. With the above-mentioned configuration, an addition process is performed for each set of three pixels in the vertical direction. Addition is not performed for rows 1 and 12 to avoid barycenter movement after addition.

Since the pixels S_{HA} and S_{HB} serve as focus detecting pixels, it becomes difficult for them to perform focus detection when their signals are added to those from the image forming pixels. For this reason, if a focus detecting pixel is included in three pixels having signals to be added, its signal must solely be output without executing vertical addition. Therefore, the image forming pixels at (2,0) and (2,4), each of which forms a set of three pixels that have signals to be added and include the pixel S_{HA} at (2,2), are fixed to GND so that the gate potential of the addition MOS transistor 502 on row 2 is always OFF, regardless of the control signal V_add. Similarly, the image forming pixels at (5,3) and (5,7), each of which forms a set of three pixels that have signals to be added and include the pixel S_{HB} at (5,5), are fixed to GND so that the gate potential of the addition MOS transistor 502 on row 5 is always OFF, regardless of the control signal V_add. This makes it possible to exclude the focus detecting pixels from pixels to undergo vertical addition.

Reference numeral 503 denotes a load constant current source of the source follower amplifier 404, which is arranged on each column. Reference numeral 504 denotes a vertical selection circuit used to output the signals φRES, φTX, φSEL, and V_add to the pixel group on each row. The vertical selection circuit 504 outputs the above-mentioned control signals in accordance with a row select signal φV designated by a vertical scanning circuit 505.

Reference numeral 506 denotes a line memory which temporarily stores vertically transferred pixel signals on one row in accordance with a control signal MEM, and a capacitor used to store an analog signal is arranged on each column. Reference numerals 507 to 514 denote analog switches used to perform horizontal pixel addition. The analog switches 507 to 514 perform horizontal pixel addition of pixel signals, transferred to the analog memory, in accordance with control signals ADD1, ADD2, and ADD3. Like vertical addition, by connecting line memories in parallel with each other, the analog switches 507 to 514 execute horizontal addition, so three pixels on columns 0/2/4, three pixels on columns 3/5/7, three pixels on columns 6/8/10, and three pixels on columns 9/11/13, are added. By executing horizontal addition of three pixels after vertical addition of three pixels, signals of nine pixels can be added and output. Also, when signals of the focus detecting pixels are to be output without addition in the horizontal direction, the method described in Japanese Patent Laid-Open No. 2010-20055 can be employed.

Reference numeral 515 denotes a reset MOS transistor which resets a horizontal output line. Reference numeral 516 denotes a MOS transistor used to connect the output of the line memory to the horizontal output line. MOS transistors 516 sequentially output pixel signals to the horizontal output line under the control of a horizontal scanning circuit (to be described later). Reference numeral 517 denotes a known horizontal scanning circuit. Reference numeral 518 denotes an amplifier used to output the pixel outputs of the horizontal output line to the outside.

With the above-mentioned configuration, signals of three image forming pixels are added vertically and horizontally, and a signal of a focus detecting pixel can solely be output without addition when the focus detection pixel is included in these three pixels.

Also, the image sensor is configured to read out signals of all pixels by changing controls signals (not shown) and the timing of horizontal vertical scanning to be able to selectively perform addition thinning readout by addition of three vertical pixels and three horizontal pixels.

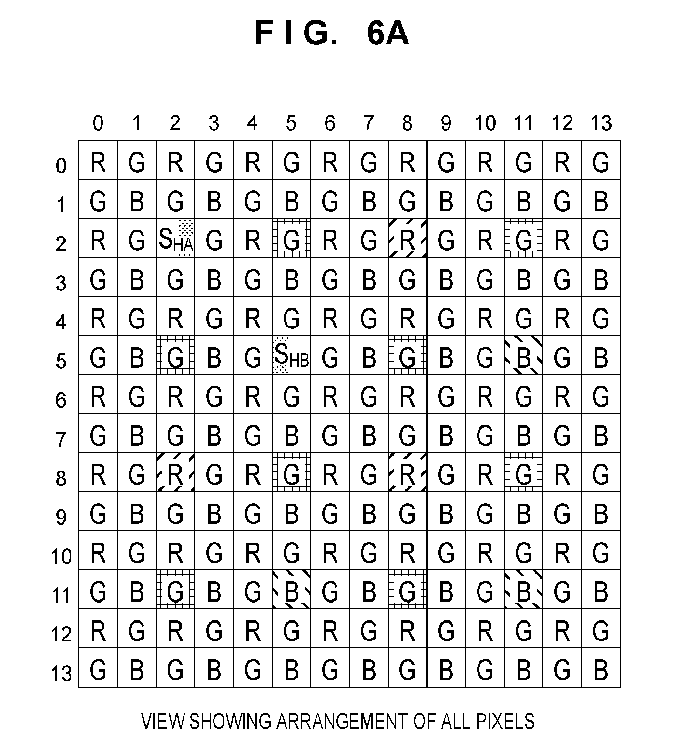

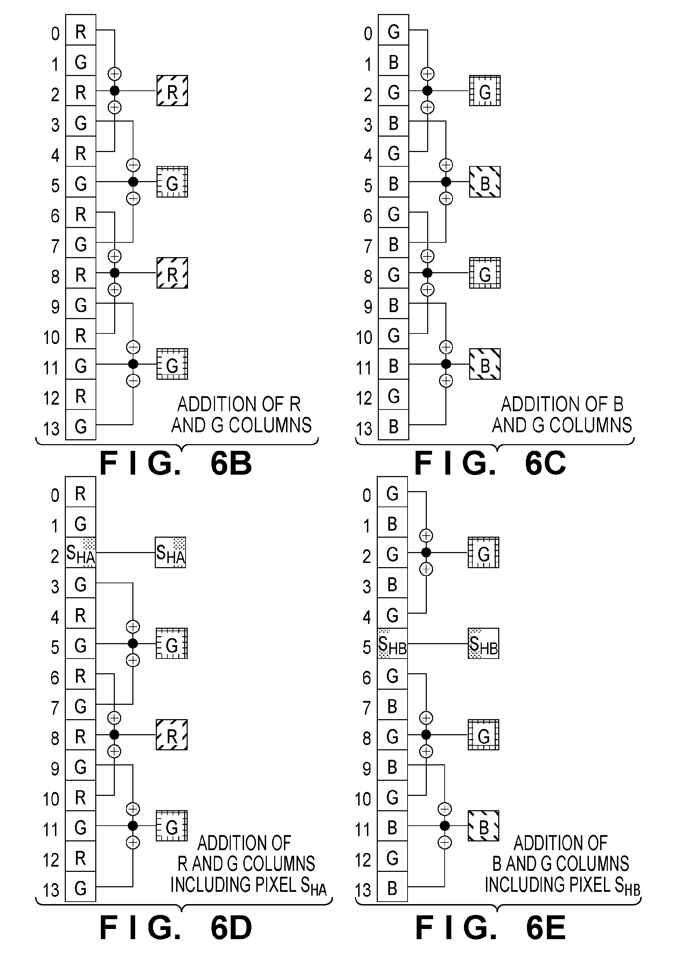

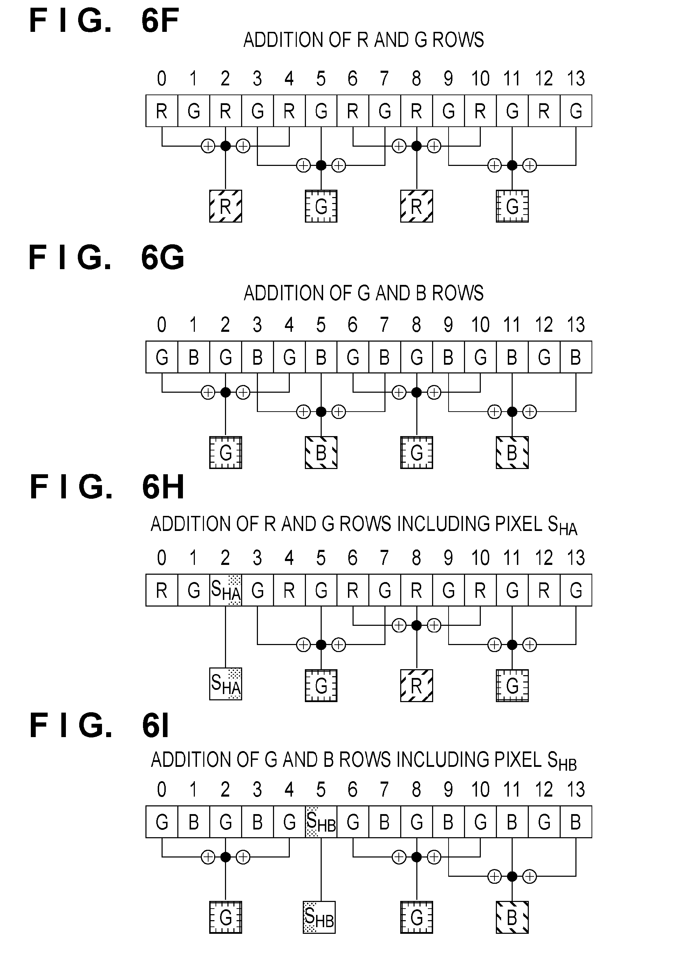

Figs. 6A-6I show views of the relationship between the pixel arrangement and the addition readout. First, Fig. 6A shows the entire arrangement of 14 × 14 pixels. Image forming pixels indicated by, for example, hatched and crosshatched portions in a of Fig. 6 show the barycentric positions of the pixels having undergone vertical and horizontal addition. Signals of the pixels S_{HA} and S_{HB} are solely output (ie without addition). Fig. 6B shows addition readout of R and G columns, Fig. 6C shows addition readout of B and G columns, Fig. 6D shows addition readout of R and G columns including the pixel S_{HA}, and Fig. 6E shows addition readout of B and G columns including the pixel S_{HB}. The relationship between the pixel states before and after horizontal addition is apparent from Figs. 6A-6I, and a description thereof will not be given.

Similarly, Fig. 6F shows addition readout of R and G rows, Fig. 6G shows addition readout of G and B rows, Fig. 6H shows addition readout of R and G rows including the pixel S_{HA}, and Fig. 6I shows addition readout of G and B rows including the pixel S_{HB}. The relationship between the pixel states before and after horizontal addition is apparent from Figs. 6A-6I, and a description thereof will not be given.

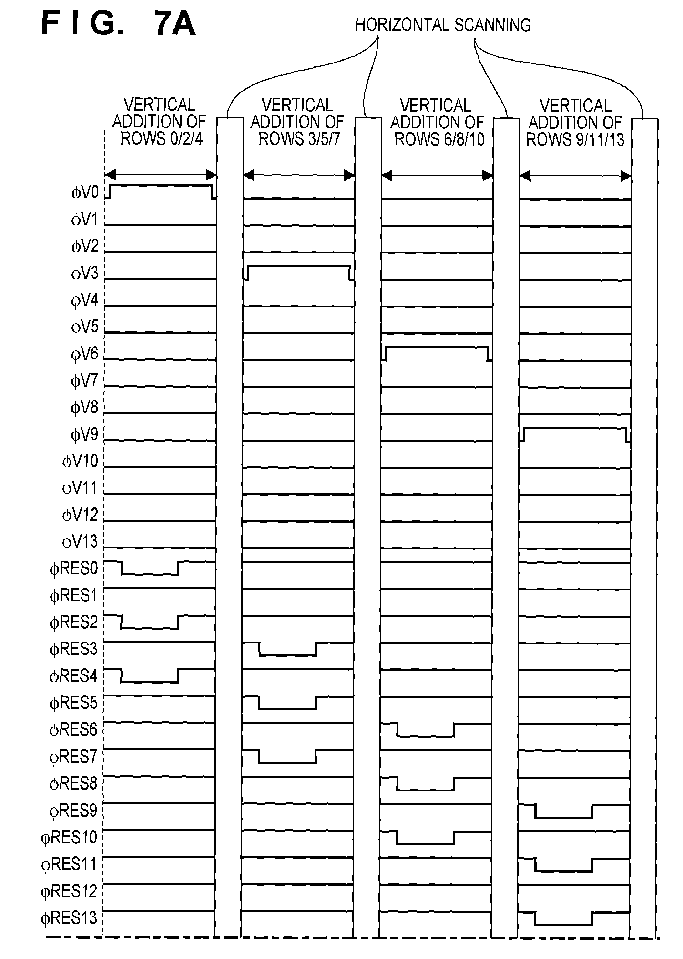

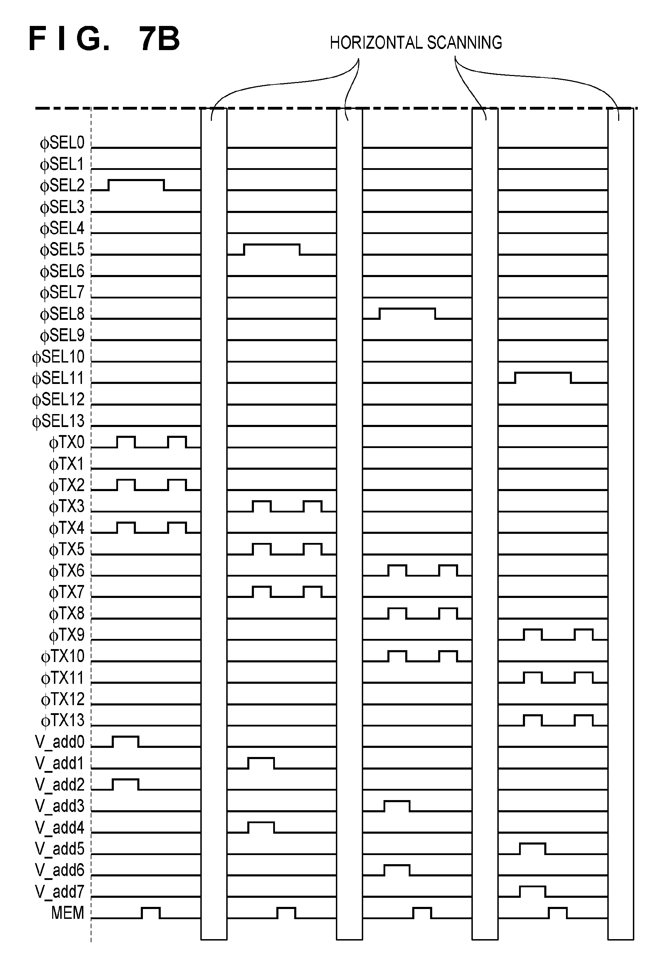

Figs. 7A and 7B are timing charts for explaining readout of the image sensor shown in Fig. 5, and shows the timing of vertical scanning in vertical addition readout of three pixels. Readout of all pixels will not be described herein.

First, a vertical scanning signal φV0 is output, and φRES0, φRES2, and φRES4 are changed to L level to turn off the reset MOSs on rows 0, 2, and 4. At this time, φSEL2 is output to turn on the pixel selection MOS on row 2. In this state, V_add0 and V_add2 are changed to H level to connect the FD capacitors on rows 0, 2, and 4 in parallel with each other, and the charge transfer MOSs are turned on in accordance with φTX0, φTX2, and φTX4 to transfer the charges on the photodiodes on rows 0, 2, and 4 to the parallel-connected FD capacitors. After completion of transfer, the signals φTX and V_add are returned to L level. Then, the signal MEM is changed to H level to vertically transfer pixel signals after addition of three pixels to the line memory. At this time, the addition MOS transistor is always OFF, so a signal of the pixel S_{HA} is solely output without addition output.

When vertical transfer is complete, the signal φRES is returned to H level, and φTX0, φTX2, and φTX4 are changed to H level again to reset the photodiodes and the FD capacitors. After reset, φTX is returned to L level again to start charge storage on the photodiodes on rows 0, 2, and 4. After completion of vertical transfer, horizontal scanning is performed, and readout of rows 0, 2, and 4 is thus completed.

Then, vertical transfer and horizontal scanning of rows 3/5/7 are performed in this order first, vertical transfer and horizontal scanning of rows 6/8/10 are performed in this order next, and vertical transfer and horizontal scanning of rows 9/11/13 are performed in this order lastly, thus completing addition thinning readout by addition of three vertical pixels and three horizontal pixels. The timing of this operation is apparent from Figs. 7A and 7B, and a detailed description thereof will not be given. Also, since the addition MOS transistor of the pixel S_{HB} placed on row 5 is always OFF as well, the pixel S_{HB} also solely outputs a signal in the same way as in the pixel S_{HA}, as a matter of course. The horizontal scanning will be described in detail later.

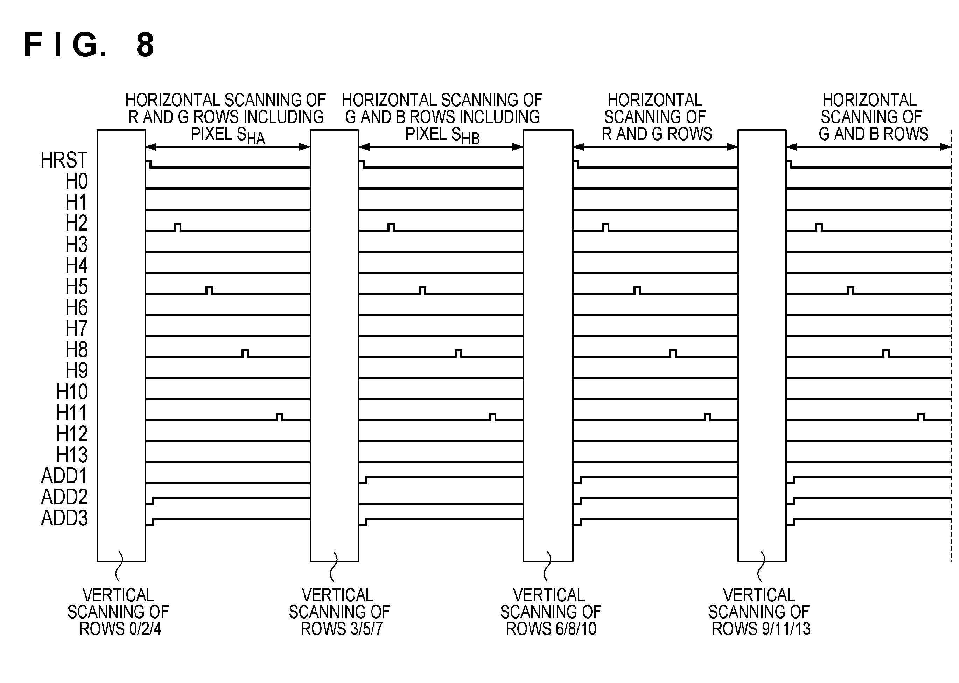

Fig. 8 is a timing chart for explaining readout of the image sensor shown in Fig. 5, and shows the timing of horizontal scanning in horizontal addition readout of three pixels. Readout of all pixels will not be described herein. First, vertically transferred pixel signals on rows 0/2/4 are output to the external terminal of the image sensor by horizontal scanning. In this operation, a signal HRST is output to reset a horizontal transfer line to a predetermined potential VHRST. Horizontal scanning signals H2, H5, H8, and H11 are then sequentially output in order by the horizontal scanning circuit to turn on the corresponding MOS transistors 516 sequentially, thereby outputting signals from columns 2, 5, 8, and 11 in the line memory 506 to the outside via the amplifier 518. Also, since vertical addition signals on rows 0/2/4 include the solely output pixel S_{HA}, horizontal addition signals are controlled as ADD1 = L and ADD2 = ADD3 = H, and a signal of column 2 is output without horizontal addition of columns 0, 2, and 4. Signals of other columns 3/5/7, 6/8/10, and 9/11/13 are added and output.

Then, vertical transfer and horizontal scanning of rows 3/5/7, vertical transfer and horizontal scanning of rows 6/8/10, and vertical transfer and horizontal scanning of rows 9/11/13, are sequentially repeated in this order. The detailed timing of this operation is apparent from Fig. 8, and a description thereof will not be given. Also, since vertical addition signals of rows 3/5/7 include a signal of the pixel S_{HB}, horizontal addition signals are set as ADD1 = ADD3 = H and ADD2 = L, and a signal of the pixel S_{HB} is solely output, whereas signals of the remaining pixels are output upon horizontal addition.

Also, since no focus detecting pixel is included in three pixels having signals to be added, in horizontal scanning of either of rows 6/8/10 and 9/11/13, ADD1 = ADD2 = ADD3 = H is set, and all pixels are output upon horizontal addition.

As described above, the addition MOS transistor used to add the focus detecting pixel is always set OFF, regardless of the control signal, thereby obviating the need to add a new control signal used to set the focus detecting pixel to a non-addition state. This is advantageous in maintaining the opening portion of each pixel wide. Also, it is preferable to maintain a uniform arrangement and interconnection of elements of the image sensor because this suppresses pixel variations. Therefore, addition elements are preferably arranged even for non-addition pixels. In this embodiment, part of the interconnection is locally changed, thus making it possible to minimize an adverse effect that this change exerts on the uniformity.

Also, even if the focus detecting pixel S_{HA} is placed at (2,0) or (2,4), and the focus detecting pixel S_{HB} is placed at (5,3) or (5,7), their signals can solely be output without addition. When the positions of the focus detecting pixels are changed, the signals φSEL of the pixel selection MOSs in vertical transfer need only be changed in accordance with the arrangement of focus detecting pixels.

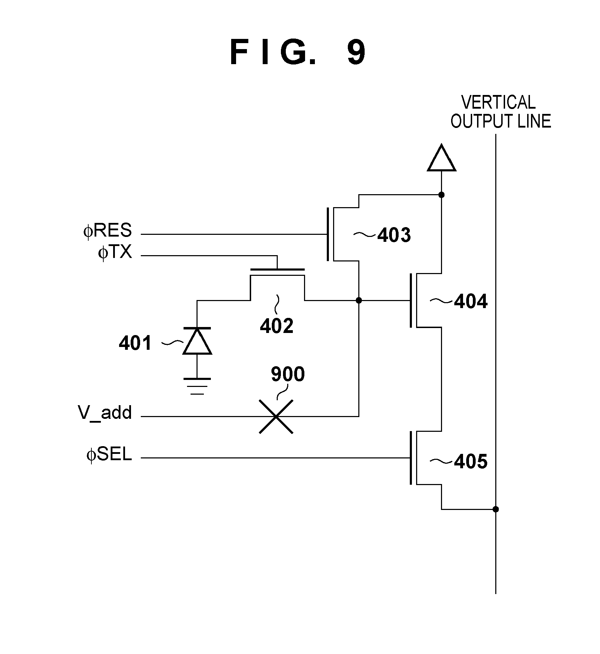

Fig. 9 illustrates a modification according to which the focus detecting pixels are set to a non-addition state. The same reference numerals as in Fig. 9 denote the same parts in the pixel portion circuit shown in Fig. 4. As indicated by reference numeral 900 in Fig. 9, a pixel to be set to a non-addition state is set as such by cutting the addition signal line V_add, thereby making it possible to obtain the same effect as in case of Fig. 5.

### (Second Embodiment)

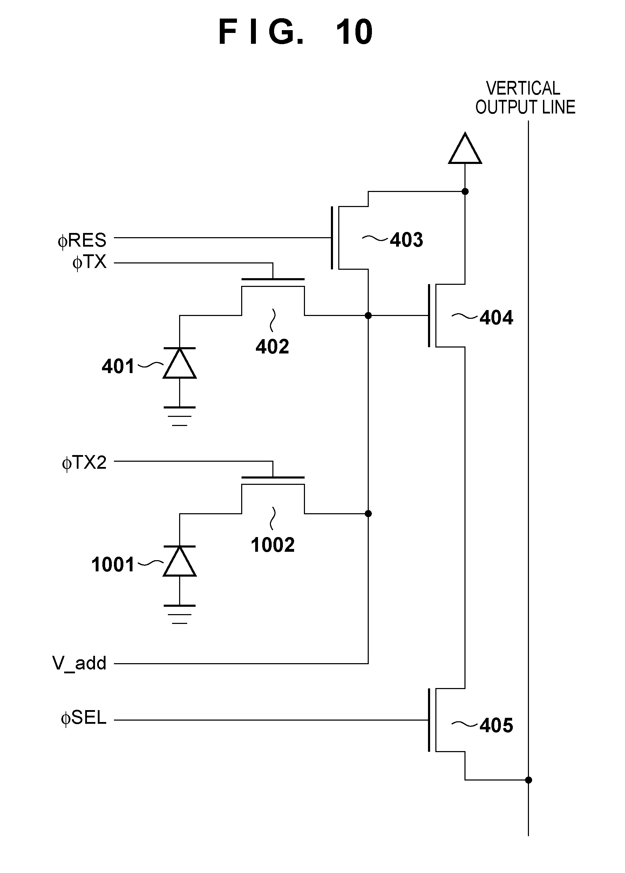

Fig. 10 is a circuit diagram of a pixel portion of an image sensor according to the second embodiment of the present invention. Referring to Fig. 10, the same reference numerals as in Fig. 4 denote constituent elements having the same functions as in Fig. 4. Normally, an image sensor which uses a CMOS performs vertical transfer for each row, so the transfer timing varies in each individual row. Therefore, to form a wide opening portion in each pixel, a plurality of pixels can commonly use (share) elements other than a transfer MOS. Fig. 10 shows sharing of elements other than a transfer MOS by two pixels. Reference numeral 1001 denotes a photodiode; and 1002, a transfer MOS of the photodiode 1001. The charge on the photodiode 1001 is transferred to an FD capacitor 404 by the transfer MOS 1002, is selected by a pixel selection MOS transistor 405, and is vertically transferred.

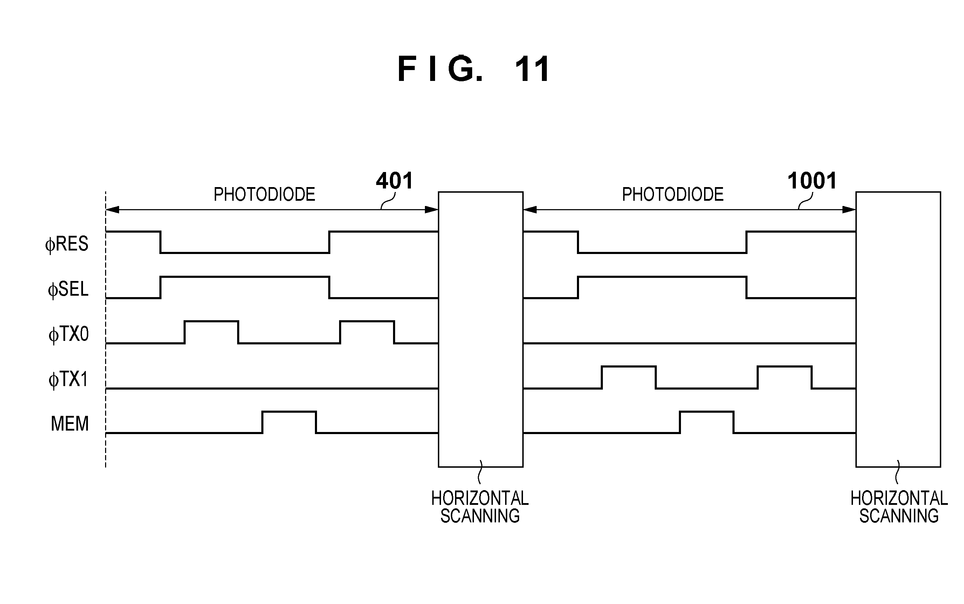

Fig. 11 is a timing chart of vertical transfer when two pixels share elements. A vertical scanning signal is not shown in Fig. 11. First, φRES is changed to L level to turn off a reset MOS. At this time, φSEL is output to turn on the pixel selection MOS. A charge transfer MOS is turned on in accordance with φTX1 to transfer the charge on a photodiode 401 to the FD capacitor. After completion of transfer, φTX1 is returned to L level. Then, a signal MEM is changed to H level to vertically transfer pixel signals to a line memory. When vertical transfer is complete, the signal φRES is returned to H level, and φTX0 is changed to H level again to reset the photodiode 401 and the FD capacitor. Vertical transfer of the photodiode 1001 is thus completed, and its horizontal transfer is executed.

φRES is changed to L level again to turn off the reset MOS. At this time, φSEL is output to turn on the pixel selection MOS. The charge transfer MOS is turned on in accordance with φTX1 to transfer the charge on the photodiode 1001 to the FD capacitor. After completion of transfer, φTX2 is returned to L level. Then, the signal MEM is changed to H level to vertically transfer pixel signals to the line memory. When vertical transfer is complete, the signal φRES is returned to H level, and φTX2 is changed to H level again to reset the photodiode 1001 and the FD capacitor. Vertical transfer of the photodiode 401 is thus completed, and its horizontal transfer is executed.

As described above, the photodiodes 401 and 1001 have different vertical transfer timings, and therefore can share other elements by providing two types of charge transfer MOSs.

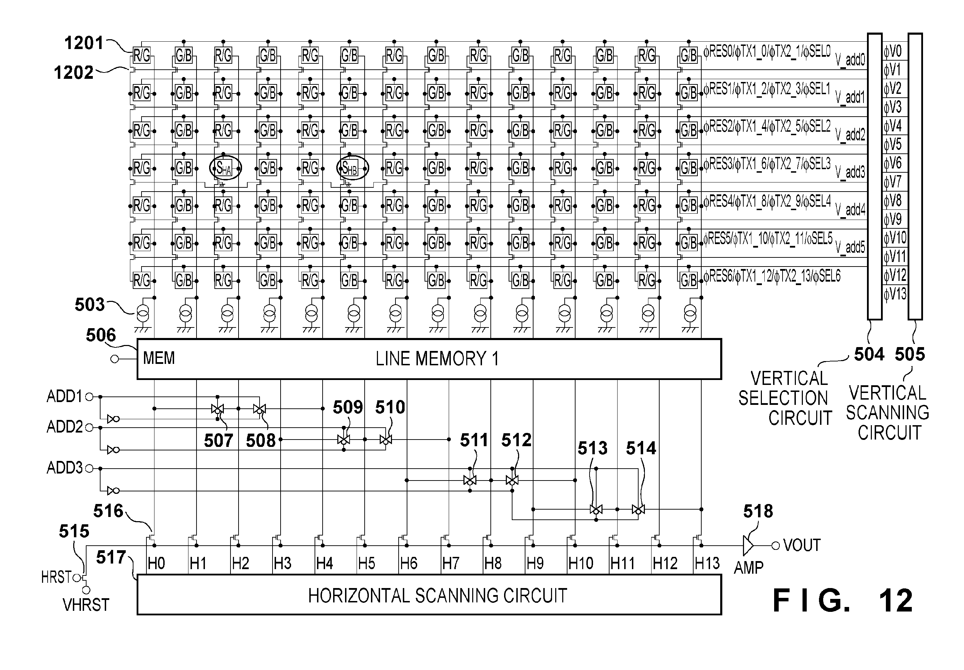

Fig. 12 is a block diagram showing the overall circuit blocks of the CMOS image sensor used in the second embodiment. Although an image sensor having several million or more pixels has been put into practical use as an actual product, a configuration having 14 × 14 pixels will be described herein for the sake of simplicity. Referring to Fig. 12, the same reference numerals as in Fig. 5 denote constituent elements having the same functions as in Fig. 5.

Reference numeral 1201 denotes a pixel portion having the circuitry shown in Fig. 11, in which 14 × 14 pixels are arranged. Pixel coordinates (X, Y) = (0,0) to (13,13) are assigned to the 14 × 14 pixels with reference to the upper left pixel. Color filters are arranged in a Bayer pattern, and R (Red), G (Green), and B (Blue) in Fig. 12 represent the colors of color filters coated on the photodiodes. Although Figs. 11 and 12 show almost the same pixel arrangement as in Figs. 4 and 5, reference symbols R/G, G/B, S_{HA}/G, and G/S_{HB} in Fig. 12 denote pixel portion circuits, each of which is common to two pixels shown in Fig. 11. The pixel arrangement will be described in detail later.

Two portions indicated by circles in Fig. 12 indicate that pairs of focus detecting pixels S_{HA} and S_{HB}, as described with reference to Figs. 3A and 3B, are normally included in sets of two pixels sharing a pixel portion circuit. Although a plurality of pairs of focus detecting pixels S_{HA} and S_{HB} are distributed on the image sensor and perform focus detection, a configuration in which only one pair of focus detecting pixels S_{HA} and S_{HB} are placed will be described for the sake of descriptive simplicity.

Reference numeral 1202 denotes a MOS transistor used to add pixel outputs in the vertical direction. MOS transistors 1202 are commonly controlled for each row by six signal lines: signal lines V_add0 to V_add5. An addition method will be described using column 0 as a representative. In this case, the MOS transistors 1202 are turned on as needed so that the FD capacitors of three R pixels at (0, 0), (0,2), and (0,4), three G pixels at (0,3), (0,5), and (0,7), three R pixels at (0,6), (0,8), and (0,10), and three G pixels at (0,9), (0,11), and (0,12), are connected in parallel with each other, and the charges on the photodiodes of the respective pixels are transferred to the parallel-connected FD capacitors, thereby performing addition. The same applies to other columns. With the above-mentioned configuration, an addition process is performed for each set of three pixels in the vertical direction. Addition is not performed for rows 1 and 12 to avoid barycenter movement after addition.

Since the pixels S_{HA} and S_{HB} serve as focus detecting pixels, it becomes difficult for them to perform focus detection when their signals are added to those from the image forming pixels. For this reason, if a focus detecting pixel is included in three pixels having signals to be added, its signal must solely be output without executing vertical addition. The gate voltages of addition MOS transistors surrounded by circles in Fig. 12 are set to GND level so that these transistors are always OFF, regardless of a control signal V_add, like Fig. 5.

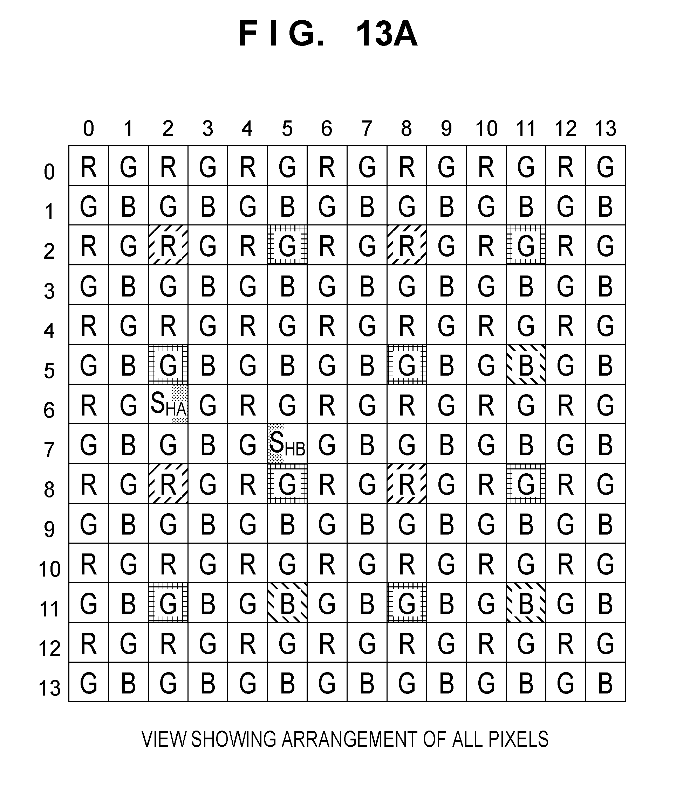

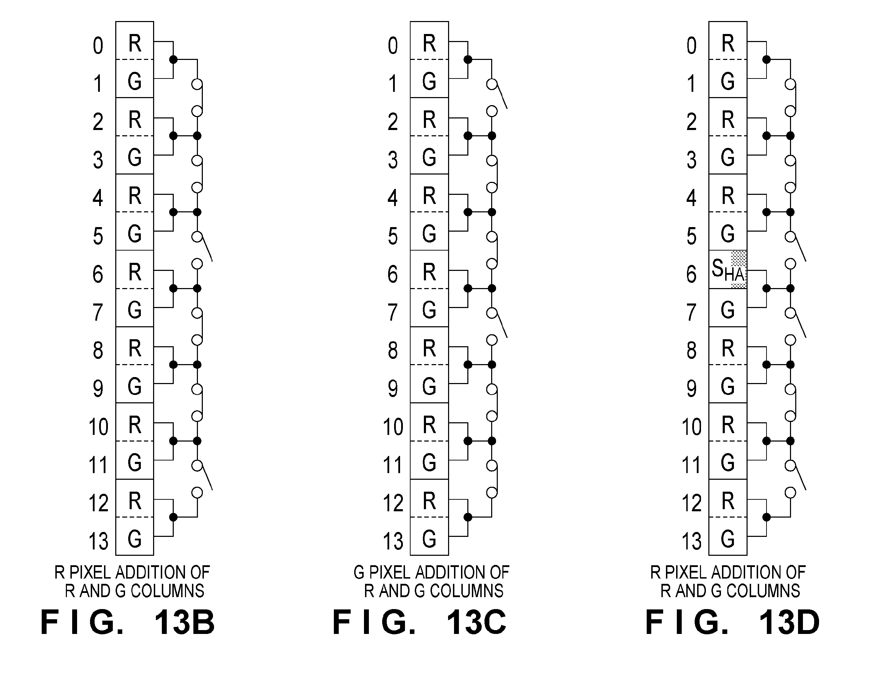

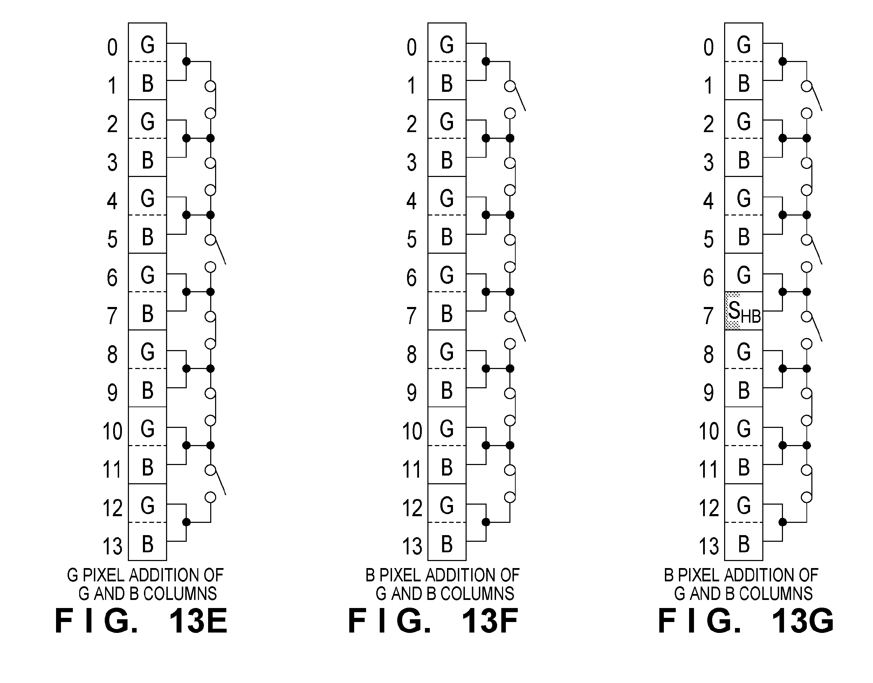

Figs. 13A-13G show views of the relationship between the pixel arrangement and the addition readout according to the second embodiment. First, Fig. 13A shows the entire arrangement of 14 × 14 pixels. Image forming pixels indicated by, for example, hatched and crosshatched portions in Fig. 13A show the barycentric positions of the pixels having undergone vertical and horizontal addition. The pixels S_{HA} and S_{HB} solely output signals (ie without addition). The arrangement of pixels S_{HA} and S_{HB} shown in Figs. 13A-13G are different from that shown in Figs. 6A-6I in terms of vertical coordinates, so the pixel S_{HA} is placed at (2,6), whereas the pixel S_{HB} is placed at (5,7). Fig. 13B shows the relationship of R pixel addition of R and G columns, Fig. 13c shows the relationship of G pixel addition of R and G columns, Fig. 13D shows the relationship of R pixel addition of R and G columns including the pixel S_{HA}, Figs. 13E shows the relationship of G pixel addition of G and B columns, Fig. 13F shows the relationship of B pixel addition of G and B columns, and Fig. 13G shows the relationship of B pixel addition of B and G columns including the pixel S_{HB}.

### Fig. 13B will be described first.

Switches shown in Fig. 13B exhibit the state of the addition MOS transistors 1202 shown in Fig. 12 when R pixels have signals to be added. By setting the addition MOS transistors in a state, as shown in Fig. 13, three R pixels on rows 0, 2, and 4, and three pixels on rows 6, 8, and 10, are added in the vertical direction.

Similarly, by setting the addition MOS transistors in a state, as shown in Fig. 13c, three G pixels on rows 3, 5, and 7 and those on rows 9, 11, and 13 are added in the vertical direction.

Also, by setting the addition MOS transistors in a state, as shown in d of Fig. 13, on a column including the focus detecting pixel, signals of three R pixels on rows 0, 2, and 4 are added, a signal of the pixel S_{HA} on row 6 is solely output, and signals of R pixels on rows 8 and 10 are added. In the second embodiment, as in the first embodiment, an addition switch is always set OFF to prevent a signal of the focus detecting pixel from being added in a chip state so as to solely output this signal. However, when a focus detecting pixel is placed at (2,2), as in the first embodiment, an addition switch which adds signals of rows 2 and 4 must be set in a normal OFF state.
When this is done, a G pixel on row 3 among addition G pixels on rows 3, 5, and 7 is excluded as a target. Therefore, in the second embodiment in which two pixels constitute a common circuit, a focus detecting pixel is placed on row 6, which has no adverse effect on addition of G pixels (which does not hinder addition).

Fig. 13E-13G show the states of the addition switches on G and B columns. The mechanism of these addition switches on G and B columns is the same as those on R and G columns, and a description thereof will not be given.

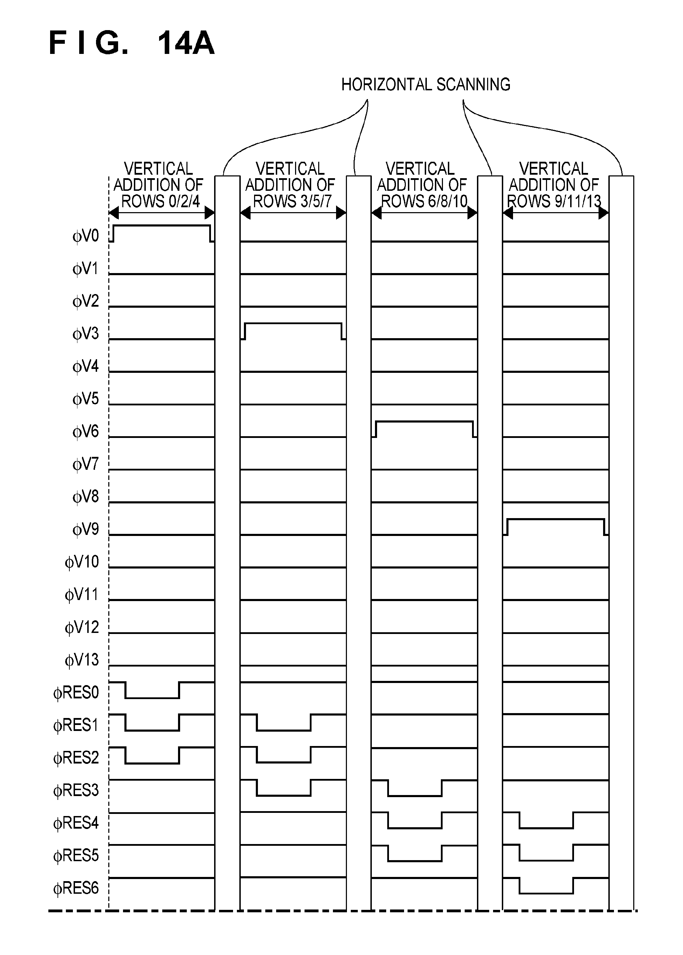

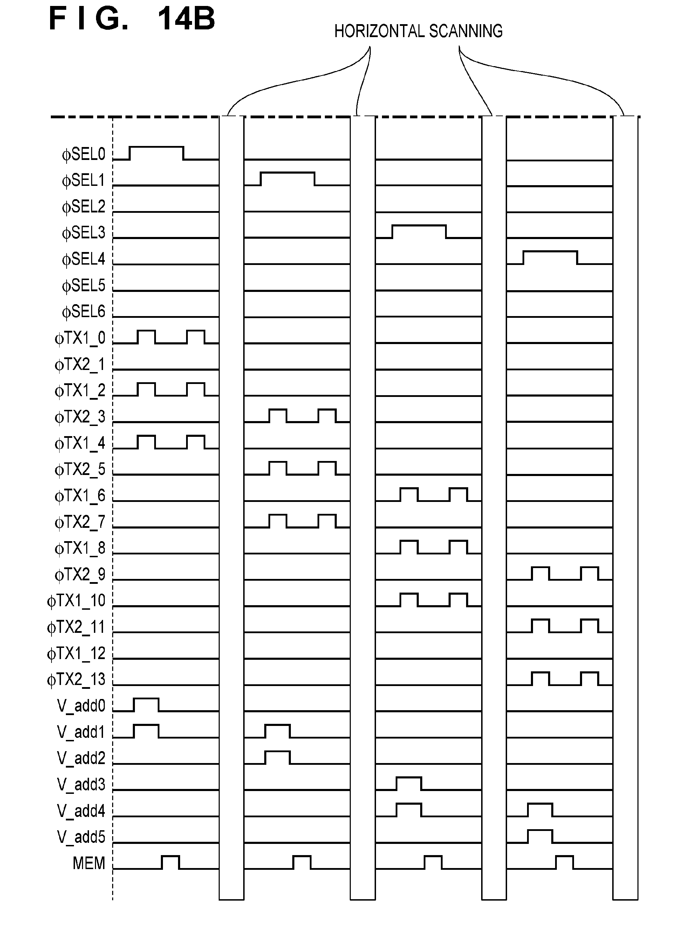

Figs. 14A and 14B are timing charts for explaining readout of the image sensor shown in Fig. 12, and shows the timing of vertical scanning in vertical addition readout of three pixels. Readout of all pixels will not be described herein.

First, a vertical scanning signal φV0 is output, and φRES0, φRES1, and φRES2 are changed to L level to turn off the reset MOSs on rows 0/1, 2/3, and 4/5. At this time, φSEL0 is output to turn on the pixel selection MOS on rows 0/1. In this state, V_add0 and V_add1 are changed to H level to connect the FD capacitors on rows 0/1, 2/3, and 4/5 in parallel with each other, and the charge transfer MOSs are turned on in accordance with φTX1_0, φTX1_2, and φTX1_4 to transfer the charges on the photodiodes on rows 0, 2, and 4 to the parallel-connected FD capacitors. After completion of transfer, the signals φTX and V_add are returned to L level. Then, the signal MEM is changed to H level to vertically transfer pixel signals after addition of three pixels to the line memory. When vertical transfer is complete, the signal φRES is returned to H level, and φTX1_0, φTX1_2, and φTX1_4 are changed to H level again to reset the photodiodes and the FD capacitors. After reset, φTX is returned to L level again to start charge storage on the photodiodes on rows 0, 2, and 4. After completion of vertical transfer, horizontal scanning is performed, and readout of rows 0, 2, and 4 is thus completed.

Next, a vertical scanning signal φV3 is output, and φRES1, φRES2, and φRES3 are changed to L level to turn off the reset MOSs on rows 2/3, 4/5, and 6/7. At this time, φSEL1 is output to turn on the pixel selection MOS on rows 2/3. In this state, V_add1 and V_add2 are changed to H level to connect the FD capacitors on rows 2/3, 4/5, and 6/7 in parallel with each other, and the charge transfer MOSs are turned on in accordance with φTX2_3, φTX2_5, and φTX2_7 to transfer the charges on the photodiodes on rows 3, 5, and 7 to the parallel-connected FD capacitors. After completion of transfer, the signals φTX and V_add are returned to L level. Then, the signal MEM is changed to H level to vertically transfer pixel signals after addition of three pixels to the line memory. Also, since the addition MOS transistor of the pixel S_{HB} placed on row 7 is always OFF, the pixel S_{HB} solely outputs a signal. When vertical transfer is complete, the signal φRES is returned to H level, and φTX2_3, φTX2_5, and φTX2_7 are changed to H level again to reset the photodiodes and the FD capacitors. After reset, φTX is returned to L level again to start charge storage on the photodiodes on rows 3, 5, and 7. After completion of vertical transfer, horizontal scanning is performed, and readout of rows 3, 5, and 7 is thus completed.

A vertical scanning signal φV6 is output, and φRES3, φRES4, and φRES5 are changed to L level to turn off the reset MOSs on rows 6/7, 8/9, and 10/11. At this time, φSEL3 is output to turn on the pixel selection MOS on rows 6/7. In this state, V_add3 and V_add4 are changed to H level to connect the FD capacitors on rows 6/7, 8/9, and 10/11 in parallel with each other, and the charge transfer MOSs are turned on in accordance with φTX1_6, φTX1_7, and φTX1_8 to transfer the charges on the photodiodes on rows 6, 7, and 8 to the parallel-connected FD capacitors. After completion of transfer, the signals φTX and V_add are returned to L level. Then, the signal MEM is changed to H level to vertically transfer pixel signals after addition of three pixels to the line memory. Also, since the addition MOS transistor of the pixel S_{HB} placed on row 6 is always OFF, the pixel S_{HB} solely outputs a signal.

When vertical transfer is complete, the signal φRES is returned to H level, and φTX1_6, φTX1_7, and φTX1_8 are changed to H level again to reset the photodiodes and the FD capacitors. After reset, φTX is returned to L level again to start charge storage on the photodiodes on rows 6, 8, and 10. After completion of vertical transfer, horizontal scanning is performed, and readout of rows 6, 8, and 10 is thus completed.

Lastly, a vertical scanning signal φV9 is output, and φRES4, φRES5, and φRES6 are changed to L level to turn off the reset MOSs on rows 8/9, 10/11, and 12/13. At this time, φSEL4 is output to turn on the pixel selection MOS on rows 8/9. In this state, V_add4 and V_add5 are changed to H level to connect the FD capacitors on rows 8/9, 10/11, and 12/13 in parallel with each other, and the charge transfer MOSs are turned on in accordance with φTX2_9, φTX2_11, and φTX2_13 to transfer the charges on the photodiodes on rows 9, 11, and 13 to the parallel-connected FD capacitors. After completion of transfer, the signals φTX and V_add are returned to L level. Then, the signal MEM is changed to H level to vertically transfer pixel signals after addition of three pixels to the line memory.

When vertical transfer is complete, the signal φRES is returned to H level, and φTX2_9, φTX2_11, and φTX2_13 are changed to H level again to reset the photodiodes and the FD capacitors. After reset, φTX is returned to L level again to start charge storage on the photodiodes on rows 9, 11, and 13. After completion of vertical transfer, horizontal scanning is performed, and readout of rows 9, 11, and 13 is thus completed. Note that horizontal scanning is the same as in the first embodiment.

As described above, when two pixels share the circuit of a pixel portion, as indicated by the colors of the color filters on the photodiodes, for example, R/G and G/B, and G pixels have signals to be added, a focus detecting pixel is placed at the position of the addition MOS transistor to be set OFF and is always set OFF, thereby allowing the focus detecting pixel to solely output a signal without vertical addition. In this case, all normal pixels including no focus detecting pixel as a target can be added.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image capture apparatus comprising:
an image sensor (107) which includes a matrix of pixels formed by arranging, in a row direction that is a horizontal direction and a column direction that is a vertical direction, a plurality of image forming pixels, and a plurality of focus detecting pixels;
vertical output means (505) configured to output, in the vertical direction of said image sensor, signals of a plurality of pixels aligned on one column;
vertical addition means (502) configured to add, in the vertical direction of said image sensor, signals of a plurality of pixels aligned on one column; and
control means (121) which is provided with an all-pixel readout mode in which signals are read out from all pixels of said image sensor without addition, and an addition readout mode in which signals of the plurality of pixels are added in the vertical direction by said vertical addition means, and wherein said vertical addition means is always configured to be OFF in a case where the focus detecting pixel is included in pixels including signals to be added, in the addition readout mode.

2. The apparatus according to claim 1, wherein said image sensor includes an interconnection layer for transmitting signals within the sensor, and wherein said interconnection layer is locally adapted to prevent vertical addition of image forming pixels with focus detecting pixels

3. The apparatus according to claim 2, wherein said interconnection layer includes a plurality of addition transistors for selecting pixels to be added, and wherein at least one of said transistors is grounded.

4. The apparatus according to claim 2 or claim 3 wherein said interconnection layer includes a vertical addition signal line at each pixel, and wherein at least one of said vertical addition signal lines is disabled.

5. The apparatus according to any preceding claim, wherein the plurality of image sensing pixels are divided into a plurality of pixels which output luminance information and a plurality of pixels which output color information, and a set of the plurality of pixels which output the luminance information and a set of the plurality of pixels which output the color information shares part of a circuit provided in each pixel.

6. The apparatus according to claim 5, wherein the focus detecting pixels are replaced with some of the plurality of pixels which output the color information, and are placed at positions at which the focus detecting pixels do not hinder addition of the plurality of pixels which output the luminance information.

7. The apparatus according to any preceding claim, wherein said image forming pixels receive light beams having passed through exit pupils of imaging lenses, and said focus detecting pixels receive light beams having passed through the exit pupils of the imaging lenses (101, 103, 105) while the exit pupils of the imaging lenses are partially shielded.

8. A method of manufacturing an apparatus comprising an image sensor (107) which includes a matrix of pixels arranged with, in a row direction that is a horizontal direction and a column direction that is a vertical direction, a plurality of image forming pixels, and a plurality of focus detecting pixels;
vertical output means (505) configured to output, in the vertical direction of said image sensor, signals of a plurality of pixels aligned on one column; and
vertical addition means (502) configured to add, in the vertical direction of said image sensor, signals of a plurality of pixels aligned on one column;
said method comprising locally varying image sensor interconnections with focus detecting pixels so as to prevent vertical addition with said focus detecting pixels.
